# EUROPEAN PATENT SPECIFICATION

(11) **EP 4 539 772 B1**
(45) Date of publication and mention of the grant of the patent: **07.10.2026**
(21) Application number: 23733675.5
(22) Date of filing: 14.06.2023
(51) Int. Cl.: A61C 7/36, A61C 7/22

(54) **ORTHODONTIC APPARATUS**
ORTHODONTISCHE VORRICHTUNG
APPAREIL ORTHODONTIQUE

(30) Priority: 15.06.2022 GB 202208775
(43) Date of publication of application: 23.04.2025
(73) Proprietor: Abels, Norbert, 66424 Homburg (DE)
(72) Inventor: Abels, Norbert, 66424 Homburg (DE)
(74) Representative: Marks & Clerk LLP
(86) International application number: PCT/EP2023/065882
(87) International publication number: WO 2023/242234

(56) References cited:
- US-A- 5 074 784
- US-A- 5 711 667
- US-A1- 2002 132 207
- US-A1- 2018 116 767
- US-A1- 2021 401 547

## Description

### TECHNICAL FIELD

Embodiments of the invention relate to an orthodontic apparatus for applying a biasing force between two ends of the apparatus.

### BACKGROUND

The correction of dental malocclusions typically involves the use of one or more types of orthodontic devices. A number of these devices are designed to apply forces between locations in the mouth where the device is anchored, typically between teeth.

Orthodontic devices that employ elastic materials such as rubber bands have been used extensively to apply forces between teeth. However, such elastic materials suffer from the disadvantage that they tend to deform over time and therefore it is necessary for these devices to be replaced relatively often; sometimes on a daily basis. The replacement then often depends on the patient reducing the amount of control that the orthodontic practitioner can exercise over the treatment. Furthermore, an elastic material will lose its elastic properties if extended past a limit.

An example of an orthodontic device which exerts a biasing force, but which tends not to undergo permanent deformation and thereby lose its elastic properties, is described in WO 2016/169881 (Abels et al) . US5074784A shows a similar orthodontic tensioning device comprising two tensioning members cooperating with a coil spring surrounding said tensioning members, the tensioning members compressing said coil spring so as to exert a tension.

Other examples of orthodontic devices which use non-elastic biasing means to apply a biasing force include US 5,312,247 (Sachdeva et al)*,* US 3,772,789 (De Weoskin) and US 2012/058444 (Allesee).

However, these devices suffer from a number of disadvantages. For example, movement during extension and compression of the device is typically only permitted or designed to be uni-directional. However, movement between the anchor points during the closing and opening of a patient's mouth is typically not uni-directional, particularly when the anchor points are located on teeth of different mandibles, for example between an upper molar and a lower canine, or vice versa. This puts stress on the device and often leads to damage to, or failure of, the device. In addition, when adjustment of the device is required, for example when the length of, or the force applied by, the device needs to be adjusted by an orthodontist during the course of the treatment. This typically relies on the expertise of the orthodontist to provide the adequate level of adjustment. This can be done by cutting a length of wire, tightening a part of the device such as a screw, or the like. This subjective approach makes it difficult to provide an accurate and reliable means of adjusting the length of, or the force applied by, the device during adjustment.

Additional examples of orthodontic devices include US5711667A WO 03/009769 (Cleary),

WO 2014/130870 (Radmall et al)*,* US 2013/130190 (Lewis), and US 4,708,646 (Jasper).

Furthermore, dental devices are typical designed to be positioned to allow the normal opening and closing of a patient's mouth. Typically, dental devices are positioned to allow closure of a patient's mandible without interference between the device and the patient's teeth in an occlusal position, e.g. upon biting. This typically means placing the device sufficiently distant from the patient's teeth when the patient's mouth is closed. However, as the patient's mouth opens, his/her cheeks typically move closer to the teeth and thus to the apparatus, which may cause discomfort and, in some cases, an injury.

Generally such devices are distinguished between push and pull apparatuses. The present apparatus belongs to the pull apparatus group.

It is an object of the present invention to mitigate or alleviate one or more of the disadvantages associated with the prior art.

### SUMMARY

According to the invention, there is provided an orthodontic apparatus comprising a biasing device, the biasing device being configured to bias the apparatus in a contracted configuration, the biasing device comprising:
a first anchor having a first or proximal portion including a proximal end and a second or distal portion including a distal end, wherein the first anchor is configured for connecting to a first attachment member or to a first location within a patient's mouth at its second or distal portion;
a second anchor having a first or proximal portion including a proximal end and a second or distal portion including a distal end, wherein the second anchor is configured for connecting to a second attachment member or to a second location within a patient's mouth at its second or distal portion; and
a biasing member provided between the proximal end of the first anchor and the proximal end of the second anchor such that the first or proximal portion of the first anchor and the first or proximal portion of the second anchor overlap and extend through the biasing member, and wherein, upon extension, the proximal end of the first anchor and the proximal end of the second anchor apply a compressive force on opposite ends of the biasing member;
wherein the first or proximal portion of the first anchor extends in a first, longitudinal, direction at least when the biasing device is in a relaxed or contracted configuration and the first or proximal portion of the second anchor extend in a third, longitudinal, direction at least when the biasing device is in a relaxed or contracted configuration,
wherein the second or distal portion of the first anchor is substantially planar and extends in a second plane and in a second direction which is different from the first longitudinal direction of its respective first or proximal portion, and wherein the second or distal portion of the second anchor is substantially planar and extends in a fourth plane and in a fourth direction which is different from the third longitudinal direction of its respective first or proximal portion,
and wherein the second plane is different from the fourth plane.

The second plane and the fourth plane may not be parallel to each other.

The second plane and the fourth plane may be, at least when the device is in a relaxed or contracted configuration, at about 10-90°, e.g. about 45-90°, e.g. about 60-90°, typically about 90°, relative to each other.

By having the second or distal portions of the first and second anchors extending in different planes, this reduces the potential contact between the apparatus, e.g. second or distal ends, and respective contact points in a patient's mouth, e.g. the first attachment member or first location and/or the second attachment member or second location. This may also help install the apparatus in a patient's mouth and/or reduce contact between the apparatus, e.g. the first and/or second anchor with their respective first attachment member or first location and/or the second attachment member or second location, e.g. during installation. In particular, in use, this configuration may allow the first distal portion (e.g. connected to an upper canine) to be substantially horizontal or parallel to the occlusal plane, resulting in a reduced potential area of contact with orthodontic brackets or other equipment, in a less labial position of the apparatus, and in reduced contact with the patient's cheeks. This configuration may also allow the second distal portion (e.g. connected to a lower molar) to be oriented in a substantially vertical direction or substantially perpendicular to the occlusal plane, reducing the risk of cheek contact and/or irritation.

By having the second or distal portion of the first anchor extending in a first direction which is different from the direction of a respective first or proximal portion, and the second or distal portion of the second anchor extending in a second direction which is different from the direction of a respective first or proximal portion, in use, e.g. when the second or distal portion of the first anchor and/or of the second anchor is/are attached to a respective attachment member or to a respective location within a patient's mouth, in a closed or contracted configuration, the biasing device, e.g. a central region thereof, may be provided away from the patient's teeth, gums and/or mandibles. Such configuration may also make the apparatus attachable directly on a patient's dental brackets, i.e., may obviate the need for connectors between the apparatus, e.g. anchors, and a patient's dental brackets or wire(s).

The term "relaxed or contracted configuration" means that the biasing device is in an inactive configuration, i.e. that the biasing member is not under stress, for example is not under compression. In such configuration, the apparatus may not exert a pulling force between the second or distal portions of the first and second anchors. Thus, the device may be considered "contracted" in the sense that the second or distal portions are nearer together, i.e. the total length of the device is shorter that in the "active or extended configuration".

The term "active or extended configuration" means that the biasing device is in an activated configuration, i.e. that the biasing member is under stress, for example is under compression. In such configuration, typically upon a patient opening their mouth, the apparatus may exert a pulling force between the second or distal portions of the first and second anchors. Thus, the device may be considered "extended" in the sense that the second or distal portions are farther apart, i.e. the total length of the device is longer that in the "relaxed or contracted configuration".

At least a portion of the first anchor and/or of the second anchor may be substantially planar and/or flat, at least in a relaxed or contracted configuration.

The term "substantially planar and/or flat" will be herein understood as encompassing a geometric (flat) plane, as well as slightly curved planes, e.g. a plane having a curve in the range of 0-5°, e.g. 0-3°. Thus, the working plane may be a geometric (flat) plane, or may be a slightly curved plane, e.g. a plane having a curve in the range of 0-5°, e.g. 0-3°.

As mentioned above, the second or distal portion of the first anchor extends in a second plane. The second or distal portion of the first anchor may be substantially planar and/or flat.

The first or proximal portion of the first anchor may extend in a first plane. At least one side of the first or proximal portion of the first anchor may be substantially planar and/or flat. A side of the first or proximal portion of the first anchor facing the second anchor may be substantially planar and/or flat.

The first plane and the second plane may be parallel and/or may be the same, at last in a relaxed or contracted configuration. In such instance, the first or proximal portion and the second or distal portion of the first anchor may extend in a common plane, at least in a relaxed or contracted configuration.

As mentioned above, the second or distal portion of the second anchor extends in a fourth plane. The second or distal portion of the second anchor may be substantially planar and/or flat.

At least one side of the first or proximal portion of the second anchor may be substantially planar and/or flat, and/or may extend in a third plane. A side of the first or proximal portion of the second anchor facing the first anchor may be substantially planar and/or flat.

In use, when the device is in a relaxed or contracted configuration, the first direction and the third direction may be substantially aligned and/or parallel. In other words, when the device is in a relaxed or contracted configuration, the first or proximal portion of the first anchor and the first or proximal portion of the second anchor may be substantially aligned.

The first plane and the third plane may be parallel and/or may be the same, at least in a relaxed or contracted configuration. In such instance, the first or proximal portion of the first anchor and the first or proximal portion of the second anchor may each extend a plane, e.g. in the first plane and third plane respectively, which may be parallel and/or adjacent to one another, typically parallel and adjacent to one another.

The first or proximal portion of the first anchor and the first or proximal portion of the second anchor may be configured to contact each other, e.g. along a flat surface thereof, and/or to slide longitudinally and parallel relative to each other.

The third plane and the fourth plane may not be parallel and/or may not be the same, at last in a relaxed or contracted configuration. In such instance, the first or proximal portion and the second or distal portion of the second anchor may extend in different planes, at last in a relaxed or contracted configuration. The third plane and the fourth plane may be, at least when the device is in a relaxed or contracted configuration, at about 10-90°, e.g. about 45-90°, e.g. about 60-90°, typically about 90°, relative to each other.

Advantageously, this configuration may allow the second or distal portions of the first and second anchors extending in different planes (which may reduce undesirable contact and/or may help installation of the apparatus, as explained above), whilst allowing the respective first or proximal portions to engage each other, e.g. via a flat surface thereof, and/or to slide parallel to each other. This may permit a at least a central region of the apparatus or biasing device, e.g. a portion of the device in the region of the biasing member, to bend, flex or otherwise distort, when the apparatus is in an active or extended configuration. In use, this may permit movement of the proximal end of the first anchor and/or of the second anchor inwards and/or towards a patient's dental arch, when in an active or extended configuration. By such provision, the likelihood of interference between a patient's cheek(s) and the apparatus in an activated configuration, e.g. upon a patient opening their mouth, is reduced, as the apparatus is configured to move inwards, e.g. away from the patient's cheek(s). Further, allowing for such deformation may permit the apparatus, e.g. biasing device, to deform in the general direction of the pulling force between the second or distal portions or the first and second anchors, thus reducing the risk of damage or breakage of the device.

The first plane and the third plane may not be parallel and/or may not be the same, at least in a relaxed or contracted configuration. In such instance, the first or proximal portion of the first anchor and the first or proximal portion of the second anchor may each extend in planes, e.g. in the first plane and third plane respectively, which may not be parallel to each other, e.g. which may be perpendicular to each other.

The first or proximal portion of the first anchor and the first or proximal portion of the second anchor may be configured to engage one another, for example by complementary or interlocking configuration. For example, the first or proximal portion of the first anchor may comprise a groove configured to receive at least a portion of the first or proximal portion of the second anchor. Alternatively, or additionally, the first or proximal portion of the second anchor may comprise a groove configured to receive at least a portion of the first or proximal portion of the first anchor. Such an arrangement may increase rigidity of the device in the region of the proximal portions of the first and second anchors, e.g. in a portion of the device in the region of the biasing member, when in an active or extended configuration.

The third plane and the fourth plane may be parallel and/or may be the same, at least in a relaxed or contracted configuration. In such instance, the first or proximal portion and the second or distal portion of the second anchor may extend in the same plane, at least in a relaxed or contracted configuration.

Advantageously, this configuration may allow the second or distal portions of the first and second anchors extending in different planes (which may reduce undesirable contact and/or may help installation of the apparatus, as explained above), whilst allowing the respective the first or proximal portions to engage each other, e.g. via complementary or interlocking features. A region of the apparatus or biasing device, e.g. one or more distal portions of the device, may be configured to bend, flex or otherwise distort, when the apparatus is in an active or extended configuration.

As mentioned above, because the distal ends of the first and second anchors are not aligned with the first or proximal portions of the first and second anchors, upon activation, e.g. upon compression of the biasing member, the pulling force exerted between the distal ends of the first and second anchors acts to move one or more portions of the apparatus, e.g. the proximal portions and/or the distal portions of the anchors, such that a central portion of the apparatus is moved towards a line extending between the first and second distal ends and/or towards a line representing the pulling force applied on the apparatus.

Advantageously, at least the first or proximal portions of the first and second anchors may be made of a flexible material. The flexible material may be a shape memory material, e.g. a shape-memory metal such as nitinol. This may permit a central region of the apparatus or biasing device, e.g. a portion of the device in the region of the biasing member, to bend, flex or otherwise distort, when the apparatus is in an active or extended configuration. In use, this may permit movement of the proximal end of the first anchor and/or of the second anchor inwards and/or towards a patient's dental arch, when in an active or extended configuration. By such provision, the likelihood of interference between a patient's cheek(s) and the apparatus in an activated configuration, e.g. upon a patient opening their mouth, is reduced, as the apparatus is configured to move inwards, e.g. away from the patient's cheek(s). Further, allowing for such deformation may permit the apparatus, e.g. biasing device, to deform in the general direction of the pulling force between the second or distal portions or the first and second anchors, thus reducing the risk of damage or breakage of the device. This may also permits movement of a central region of the apparatus away from part of a patient's mouth upon activation.

One or more of the second or distal portions of the first and second anchors, typically the second or distal portions of the first and second anchors, may be made of a flexible material. The flexible material may be a shape memory material, e.g. a shape-memory metal such as nitinol. This may permit the distal portions of the first and second anchors, to bend, flex or otherwise distort, when the apparatus is in an active or extended configuration. This may be particularly advantageous when the first or proximal portions of the first anchor and of the second anchor are configured to engage one another, for example by complementary or interlocking features, as the central region of the device may then have reduced flexibility or bending ability.

Thus, in a first aspect, that does not include all the features of the invention, there is provided an orthodontic apparatus comprising a biasing device, the biasing device being configured to bias the apparatus in a contracted configuration, the biasing device comprising:
a biasing member;
a first anchor configured for connecting to a first attachment member or to a first location within a patient's mouth at a distal end thereof; and
a second anchor configured for connecting to a second attachment member or to a second location within a patient's mouth at a distal end thereof,

wherein the first anchor and the second anchor each have a first or proximal portion and a second or distal portion,
wherein the first or proximal portion of the first anchor extends in a first, longitudinal, direction at least when the biasing device is in a relaxed or contracted configuration and the first or proximal portion of the second anchor extend in a third, longitudinal, direction at least when the biasing device is in a relaxed or contracted configuration,
wherein the second or distal portion of the first anchor extends in a second plane and in a second direction which is different from the first longitudinal direction of its respective first or proximal portion, and wherein the second or distal portion of the second anchor extends in a fourth plane and in a fourth direction which is different from the third longitudinal direction of its respective first or proximal portion,
wherein the second plane is different from the fourth plane,
and wherein the first or proximal portions of the first anchor and of the second anchor are made of a flexible material.

The second or distal portions of the first anchor and of the second anchor may also be made of a flexible material.

The flexible material may be a shape memory material, e.g. a shape memory metal or alloy such as nitinol, or combinations of a shape-memory metal and resin. By such provision, when the orthodontic apparatus, e.g. biasing apparatus, is moved into an open or extended configuration, the first anchor and/or the second anchor may be subjected to a force causing the first anchor and/or the second anchor to align along the direction of the force, in a direction between the first attachment member and the second attachment member. By using a deformable and/or shape memory material, the first anchor and/or the second anchor may be capable of recovering their initial, curved shape in a closed or contracted configuration, thus avoiding interfering with a patient's soft tissue, even after multiple opening/closing cycles of a patient's mouth. This may be particularly advantageous when the first attachment member is defined by the first location or component thereof, and/or when the second attachment member is defined by part of the second location or component thereof, e.g. when the first attachment member and/or second attachment member is/are not provided as separate or discrete components. In such instance, any stress applied to the apparatus during opening of the subject's mouth, may be compensated by temporary deformation of the resilient material, e.g. of the anchor first and/or of the second anchor. This may help minimise damage to the apparatus and/or prolong the life of the apparatus.

According to a second aspect, that does not include all the features of the invention, there is provided an orthodontic apparatus comprising a biasing device, the biasing device being configured to bias the apparatus in a contracted configuration, the biasing device comprising:
a biasing member;
a first anchor configured for connecting to a first attachment member or to a first location within a patient's mouth at a distal end thereof; and
a second anchor configured for connecting to a second attachment member or to a second location within a patient's mouth at a distal end thereof,

wherein the first anchor and the second anchor each have a first or proximal portion and a second or distal portion,
wherein the first or proximal portion of the first anchor extends in a first, longitudinal, direction at least when the biasing device is in a relaxed or contracted configuration and the first or proximal portion of the second anchor extend in a third, longitudinal, direction at least when the biasing device is in a relaxed or contracted configuration,
wherein the second or distal portion of the first anchor extends in a second plane and in a second direction which is different from the first longitudinal direction of its respective first or proximal portion, and wherein the second or distal portion of the second anchor extends in a fourth plane and in a fourth direction which is different from the third longitudinal direction of its respective first or proximal portion,
and wherein the first or proximal portions of the first anchor and of the second anchor are made of a flexible material.

The second or distal portions of the first anchor and of the second anchor may also be made of a flexible material.

The flexible material may be a shape memory material, e.g. a shape memory metal or alloy such as nitinol, or combinations of a shape-memory metal and resin.

The second plane may be different from the fourth plane.

The features described in relation to the apparatus of the first aspect may equally apply in relation the apparatus of the second aspect, and are not repeated here merely for reasons of brevity.

The following features may apply to the embodiments of the present invention.

The first anchor may have a first or proximal portion extending from a first end towards a second or distal end, and a second or distal portion extending from the second or distal end towards the first or proximal end. The first or proximal portion of the first anchor extends in the first longitudinal direction.

The first direction may be a substantially linear direction. The term "substantially linear" will be herein understood as encompassing geometric (straight) direction, as well as slightly curved direction, e.g. a direction extending along a curve in the range of 0-5°, e.g. 0-3° from straight.

The second or distal portion of the first anchor extends in a second direction. The second direction may be a substantially linear direction. The second or distal portion may be curved. The second or distal portion of the first anchor may extend in a second direction in a substantially linear, curved, or stepped manner.

As mentioned above, the first and second directions are different.

The first and second direction may extend at an angle relative to each other, e.g. at an angle of about 5-90°, e.g. about 10-80°, typically about 20-70°.

The first anchor may have an intermediate portion between the first or proximal portion the second or distal portion. The intermediate portion may provide a transition region between the first or proximal portion the second or distal portion. For example, the intermediate portion may be curved. The intermediate portion may be provided within the first plane, within the second plane, or within an intermediate plane. Alternatively, the first or proximal portion may directly merge with the second or distal portion.

The second anchor may have a first or proximal portion extending from a first or proximal end thereof towards a second or distal end, and a second or distal portion extending from a second or distal end thereof towards the first or proximal end. The first or proximal portion of the second anchor extends in a third direction.

The third direction may be a substantially linear direction. The term "substantially linear" will be herein understood as encompassing geometric (straight) direction, as well as slightly curved direction, e.g. a direction extending along a curve in the range of 0-5°, e.g. 0-3° from straight.

The second or distal portion of the second anchor extends in a fourth direction. The fourth direction may be a substantially linear direction. The second or distal portion of the second anchor may be curved. The second or distal portion of the second anchor may extend in a second direction in a substantially linear, curved, or stepped manner.

The third direction and the fourth direction may extend at an angle relative to each other, e.g. at an angle of about 5-90°, e.g. about 10-80°, typically about 20-70°.

The second anchor may have an intermediate portion between the first or proximal portion the second or distal portion. The intermediate portion may provide a transition region between the first or proximal portion the second or distal portion. For example, the intermediate portion may be curved. The intermediate portion may be provided within the third plane, within the fourth plane, or within an intermediate plane. Alternatively, the first or proximal portion may directly merge with second or distal portion.

The first or proximal end of the first anchor may extend past the first or proximal end of the second anchor. The first or proximal end of the second anchor may extend past the first or proximal end of the first anchor. In other words, the device may comprise a region, e.g. a central region thereof, where the first or proximal portion of the first anchor and the first or proximal portion of the second anchor overlap.

The first or proximal end of the first anchor may extend past the biasing member.

The first or proximal end of the second anchor may extend past the biasing member.

The biasing member may be provided between the first or proximal end of the first anchor and the first or proximal end of the second anchor.

The apparatus may comprise a first catch configured to engage a first end of the biasing member. The apparatus may comprise a second catch configured to engage a second end of the biasing member. The biasing member may be provided between the first catch and the second catch.

The first catch and/or second catch may be provided in the form of a hook, shoulder, protrusion, or the like.

The biasing member may be provided between the first or proximal portion of the first anchor and the first or proximal portion of the second anchor, e.g. between the first catch and the second catch.

Thus, the biasing member may act as a guide to maintain the first or proximal portions of the first anchor and of the second anchor in close proximity to each other, e.g. in contact or in engagement with each other.

The first or proximal portion of the first anchor extends through the biasing member.

The first or proximal portion of the second anchor extends through the biasing member.

In use, upon extension, e.g. upon pulling on the distal ends of the first anchor and of the second anchor, the first or proximal end of the first anchor, e.g. first catch, and the first or proximal end of the second anchor, e.g. second catch apply a force on opposite ends of the biasing member therebetween, so as to apply a compressive force on the biasing member.

Typically, the biasing member may comprise or may be a spring.

The biasing member may comprise or may be helical spring.

The biasing member may be metallic.

The biasing member may comprise or may be a metallic spring. The biasing member may be made of a shape memory material, e.g. a shape memory metal or alloy such as nitinol, or combinations of a shape-memory metal and resin.

The biasing member may exert a biasing force under compression.

The first anchor may be inelastic. The first anchor may be made of metal.

The second anchor may be inelastic. The second anchor may be made of metal.

The biasing member may comprise a limiter for preventing movement of the biasing member past a predetermined limit.

The biasing member may exert a biasing force in a linear direction.

The limiter may be defined by a maximum compression of the biasing member. The limiter may be the biasing member, e.g. helical spring.

The biasing member may generally extend in a longitudinal direction, e.g., may generally extend along a longitudinal axis thereof. The biasing member may have a first end and a second end.

The first anchor, i.e. first or proximal portion thereof, extends along and through, the biasing member. The second anchor, i.e. first or proximal portion thereof, extends along and through, the biasing member. By such provision, in use, the first anchor and/or the second anchor may exert a compression force on the biasing member. The biasing device may thus be capable of applying or exerting a pulling force when the biasing member is under compression. Pulling forces are needed for the treatment of certain classes of malocclusions.

Specific and alternative features of such a biasing member, biasing device, and/or limiter are described in WO 2016/169881 (Abels et al).

The biasing member may comprise a helical spring having a plurality of coils.

The limiter may comprise or may be defined by the coils of the spring being placed in contact with one another when the helical spring is compressed.

The apparatus may comprise a first attachment member for attaching the biasing device, to a first location within a patient's mouth; and/or
a second attachment member for attaching the biasing device, to a second location within a patient's mouth.

The first anchor may comprise a plurality of connection elements for connecting to the first attachment member. The second anchor may comprise a plurality of connection elements for connecting to the second attachment member.

Typically, the first location and/or the second location may comprise a first tooth and/or a second tooth. It will be understood, however, that the first location and/or the second location may include conventional means of attaching an orthodontic device to a patient's tooth or part of a patient's dental anatomy, depending on the kind of tooth in question, and may comprise a dental implement such as a bracket, a molar band, a dental wire extending between brackets or bands, a bracket tool such as a pin, or the like.

The connection elements may allow the length of the first anchor and/or of the second anchor to be adjusted, e.g. relative to a respective attachment member. For example, the first anchor may be connected to the first attachment member via one of the plurality of connection elements in a first configuration, and the first anchor may be connected to the first attachment member via a different connection element in a second, tighter, configuration. Similarly, the second anchor may be connected to the second attachment member via one of the plurality of connection elements in a first configuration, and the second anchor may be connected to the second attachment member via a different connection element in a second, shorter, configuration.

The connection elements may comprise one or more of openings, holes, grooves, teeth, notches, graduations, interlocked rings, or a combination thereof. In an embodiment, the connection elements may comprise a plurality of holes in the first anchor and/or in the second anchor.

In use, the first anchor may be connected to the first attachment member via one of the plurality of connection elements. Typically, the first anchor may be connected to the first attachment member via a distalmost connection element, e.g. via a/the connection element located at or near a distal end of the first anchor, e.g., relative to the biasing member and/or relative to the second anchor. This may avoid part of the first anchor extending or protruding beyond the first attachment member, e.g. towards the teeth or gums of a patient, thus minimising the risk of discomfort or injury to the patient.

In use, the second anchor may be connected to the second attachment member via one of the plurality of connection elements. Typically, the second anchor may be connected to the second attachment member via a distalmost connection element, e.g. via a/the connection element located at or near a distal end of the second anchor, e.g., relative to the biasing member and/or relative to the first anchor. This may avoid part of the second anchor extending or protruding beyond the second attachment member, e.g. towards the teeth or gums of a patient, thus minimising the risk of discomfort or injury to the patient.

The connection elements may be spaced apart, e.g., may be longitudinally spaced apart, on the first anchor and/or on the second anchor, e.g. on a second or distal portion thereof. The connection elements may be longitudinally aligned, e.g. may be spaced apart in a longitudinal direction of the first anchor and/or of the second anchor. Advantageously, the connection elements may be spaced apart at predetermined intervals. By such provision, adjustment of the length of the orthodontic apparatus and/or biasing device, e.g. by adjusting the length of one or both of the first anchor and second anchor, may be improved. In particular, the present arrangement may allow a user to reliably adjust the length of the first anchor and/or second anchor by a known distance, which may in turn improve speed of the adjustment procedure, may improve reliability, accuracy, and/or quality of treatment, and may reduce the need for specialist expertise in tension adjustment.

The connection elements may be spaced apart at regular intervals. The connection elements may be spaced apart at irregular intervals, e.g. at progressive intervals (such as decreasing or increasing). It will be appreciated that the particular pattern defined by the connection elements and the manner in which they are specifically provided may depend on the specific treatment and the intended level of adjustment required for a particular patent or subject. Conveniently, the connection elements may be spaced apart at regular intervals.

The first attachment member for attaching the biasing device to the first location within a patient's mouth, may be configured to allow movement of the first anchor relative to the first location.

The second attachment member for attaching the biasing device to the second location within a patient's mouth, may be configured to allow movement of the second anchor relative to the second location.

The first attachment member may be configured to allow movement of the first anchor relative to the first location, in a least two degrees of freedom.

The second attachment member may be configured to allow the second anchor to move relative to the second location, in a least two degrees of freedom.

The first attachment member may comprise a first body arranged to connect to the first anchor and to the first location.

The first attachment member may allow rotational and/or pivotal movement relative to its respective first location, e.g. about an axis extending along or tangential to a distal-medial direction. By such provision, the orthodontic apparatus and/or biasing device may be capable of moving closer to or away from the first location, in use, for example upon closing or opening of a subject's mouth.

In use, the first body may be connected to the first location via a movable connection, e.g. a pivot or hinge. Typically, in use, the body may be pivotally or hingedly connected to the first location about an axis extending along or tangential to a distal-medial direction. Conveniently, the first attachment member, e.g. first body thereof, may be pivotally or hingedly connectable to an archwire.

The first attachment member may allow rotational and/or pivotal movement relative to the first anchor, e.g. about an axis perpendicular to the longitudinal axis of the first anchor. By such provision, the orthodontic apparatus and/or biasing device may be capable of pivoting, in use, for example upon closing or opening of a subject's mouth. This may help reduce the risk of failure or breaking of the apparatus, e.g. of the biasing device, due to the reduction of bending and stress in the apparatus and/or device.

The first body may be connected to the first anchor via a movable connection, e.g. a pivot. Typically, the body may be pivotally connected to the first anchor about an axis perpendicular to the longitudinal axis of the first anchor.

The second attachment member may comprise a body arranged to connect to the second anchor and to the second location.

The second attachment member may allow rotational and/or pivotal movement relative to its respective second location, e.g. about an axis extending along or tangential to a distal-medial direction. By such provision, the orthodontic apparatus and/or biasing device may be capable of moving closer to or away from the second location, in use, for example upon closing or opening of a subject's mouth.

The second body may be connected to the second location via a movable connection, e.g. a pivot or hinge. Typically, the body may be pivotally or hingedly connected to the second location about an axis extending along or tangential to a distal-medial direction. Conveniently, the second attachment member, e.g. second body thereof, may be pivotally or hingedly connectable to an archwire.

The second attachment member may allow rotational and/or pivotal movement relative to the second anchor, e.g. about an axis perpendicular to the longitudinal axis of the second anchor. By such provision, the orthodontic apparatus and/or biasing device may be capable of pivoting, in use, for example upon closing or opening of a subject's mouth. This may help reduce the risk of failure or breaking of the apparatus, e.g. of the biasing device, due to the reduction of bending and stress in the apparatus and/or device.

The second body may be connected to the second anchor via a movable connection, e.g. a pivot. Typically, the body may be pivotally connected to the second anchor about an axis perpendicular to the longitudinal axis of the second anchor.

As such, the first body and/or the second body may act as a spacer, e.g. a spacer capable of moving relative to its respective first or second anchor and to its first or second location.

In an alternative embodiment, the first attachment member may form part of the first location or component thereof, and/or the second attachment member may form part of the second location or component thereof. In such instance, the first anchor may be directly connected to the first location, e.g. a dental implement such as a bracket, a molar band, a dental wire extending between brackets or bands, a bracket tool such as a pin, or the like, and/or the second anchor may be directly connected to the second location, e.g. a dental implement such as a bracket, a molar band, a dental wire extending between brackets or bands, a bracket tool such as a pin, or the like.

The first and/or second location, e.g. bracket, molar band, dental wire extending between brackets or bands, bracket tool, e.g., pin, or the like, may comprise the first and/or second attachment member, respectively. The first and/or second location, e.g. bracket, may comprise pivots, e.g. vertical pivots and optional associated fastening means, which may provide one or more functions associated with the first or second attachment members described above.

### BRIEF DESCRIPTION OF DRAWINGS

Embodiments of the invention are described with reference to the accompanying drawings, in which:
Figures 1-6 show an orthodontic apparatus according to a first embodiment;
Figures 7-11 show an orthodontic device according to a second embodiment;
Figures 12-13 show an orthodontic device according to a third embodiment;
Figures 14-16 show an orthodontic device according to a fourth embodiment.

### DETAILED DESCRIPTION OF DRAWINGS

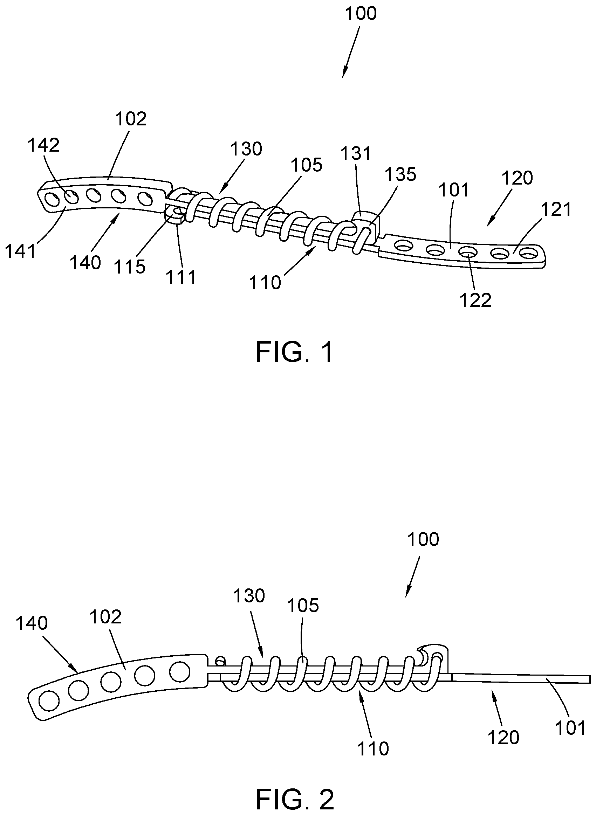

**Figures 1-6** illustrate an orthodontic apparatus 100 according to a first embodiment.

The apparatus 100 comprises a biasing member 105 configured to bias the apparatus 100 in a contracted configuration. The apparatus 100 includes a first anchor 101 arranged to connect to a first location within a patient's mouth or to a first attachment member (not shown) at a distal end 121 thereof, and a second anchor 102 configured for connecting to a second location within a patient's mouth or to a second attachment member at a distal end 141 thereof.

The manner in which the biasing member 105 exerts a biasing force on the orthodontic apparatus 100 can have a number forms and follow a number of principles, as described for example in WO 2016/169881 (Abels et al) .

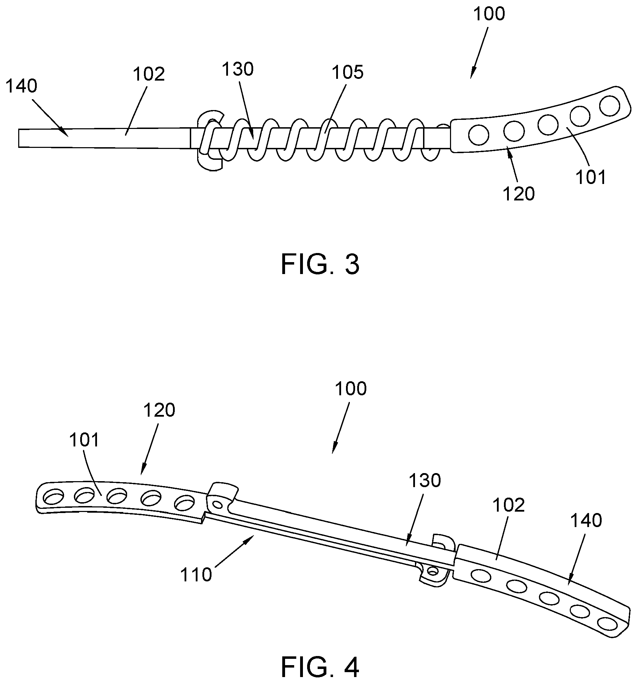

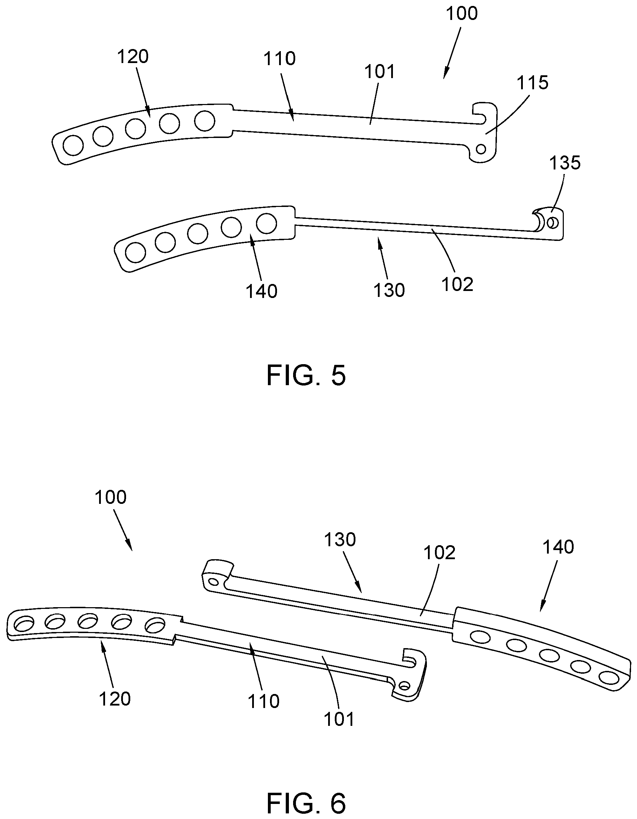

**Figure 1** shows a perspective view of the apparatus 100 according to a first embodiment, whilst **Figures 2** **and** **3** show a side view and a top view thereof, respectively. **Figure 4** shows a perspective view of the apparatus 100 without the biasing member 105, for clarity. **Figures 5 and 6** show a side view and a perspective view, respectively, of each of the first anchor 101 and second anchor 102 for better understanding of their respective configuration.

In this embodiment, the biasing member 105 is a coiled spring.

The first anchor 101 has a proximal portion 110 and a distal portion 120. The second anchor 102 has a proximal portion 130 and a distal portion 140.

The proximal portion 110 the first anchor 101 has a proximal end 111 and the distal portion 120 of the first anchor 101 has a distal end 121. The proximal portion 130 of second anchor 102 has a proximal end 131 and the distal portion 140 of the second anchor 102 has a distal end 141.

The first anchor 101 has a proximal portion 110 extending from the proximal end 111 towards the distal end 121, and a distal portion 120 extending from the distal end 121 towards the proximal end 111.

The second anchor 102 has a proximal portion 130 extending from the proximal end 131 towards the distal end 141, and a distal portion 140 extending from the distal end 141 towards the proximal end 131.

The proximal portion 110 of the first anchor 101 extends in a first longitudinal direction, and the distal portion 120 of the first anchor 101 extends in a second direction which is different from the (first) direction of the proximal portion 110.

Similarly, the proximal portion 130 of the second anchor 102 extends in a third longitudinal direction, and the distal portion 140 of the second anchor 102 extends in a fourth direction which is different from the (third) direction of the proximal portion 130.

By such provision, in use, e.g. when the distal portion 120,140 of the first anchor 101 and of the second anchor 102 are attached to a respective attachment member or to a respective location within a patient's mouth, in a closed or contracted configuration, the apparatus 100, and in particular a central region thereof in the region of the biasing member 105, is provided away from the patient's teeth, gums and/or mandibles. Such configuration also enables the apparatus 100 to be attachable directly on a patient's dental brackets, i.e., may obviate the need for connectors between the apparatus 100 and a patient's dental brackets or wire(s).

As best shown in **Figures 5 and 6****,** the proximal portion 110 of the first anchor 101 extends in a first plane, and the distal portion 120 of the first anchor 101 extends in a second plane. In this embodiment, the first plane and the second plane are the same, and each of the proximal portion 110 and distal portion 120 of the first anchor 101 is substantially flat/planar. The proximal portion 110 and the distal portion 120 of the first portion 101 are about 0.4mm thick. The proximal portion 110 of the first portion 101 is about 0.9mm wide, and the distal portion 120 of the first portion 101 is about 1mm wide.

As best shown in **Figures 5 and 6****,** the proximal portion 130 of the second anchor 102 extends in a third plane, and the distal portion 140 of the second anchor 102 extends in a fourth plane. Each of the proximal portion 130 and distal portion 140 of the second anchor 102 is substantially flat/planar. The proximal portion 130 of the second portion 102 is about 0.4mm thick and about 0.8 or 0.9mm wide. The distal portion 140 of the second portion 102 is about 0.8 or 0.9mm thick and about 1mm wide.

However, in this embodiment, the third plane and the fourth plane are substantially perpendicular.

As a result, in use, i.e. when the proximal portions 110,130 are placed in contact with each other (as best shown in **Figure 4****),** the second plane (of the distal portion 120 of the first anchor 101) is different from the fourth plane (of the distal portion 140 of the second anchor 102). In this embodiment, in a relaxed configuration (as shown in **Figures 1-3****,** the second and fourth planes are substantially perpendicular.

By having the distal portions 120,140 of the first and second anchors 101,102 extending in different planes, this reduces the potential contact between the apparatus 100, e.g. distal ends 120,140, and respective contact points in a patient's mouth, e.g. the first attachment member or first location and/or the second attachment member or second location. This may also help install the apparatus 100 in a patient's mouth and/or reduce contact between the apparatus, e.g. the first and/or second anchor 101,102 with their respective first attachment member or first location and/or the second attachment member or second location, e.g. during installation.

It will be noted that the width of the proximal portions 110,130 of the first and second anchor 101,102 are substantially equal. The width of the proximal portions 110,130 of the first and second anchor 101,102 is substantially the same as the thickness of the distal portion 140 of the second anchor 102. This allows the second anchor 102 to be manufactured, e.g. machined, from a single sheet of material, e.g. metal, e.g. nitinol. For example, in this embodiment, the first anchor 101 is machined from a 0.4 mm-thick sheet of metal, and the second anchor 102 is machined from a 0.9 mm-thick sheet of metal. It will be appreciated that the exact dimensions described in the present example are for exemplification only, and are not limiting.

The proximal end 111 of the proximal portion 110 of the first anchor 110 extends along and past the proximal end 131 of the proximal portion 130 of the second anchor 120 and beyond (in this embodiment through) the spring 105. The proximal end 135 of the proximal portion 130 of the second anchor 102 extends along and past the proximal end 111 of the proximal portion 110 of the first anchor 101 and beyond (in this embodiment through) the spring 105. In other words, the spring 105 is provided between the proximal end 111 of the proximal portion 110 of the first anchor 101 and the proximal end 131 of the proximal portion 130 of the second anchor 102.

In use, upon application of a pulling force on the distal ends 121,141 of the first anchor 101 and second anchors 102 the proximal ends 111,131 of the anchors 101,102 exert a compressive force on the spring 105.

A number of mechanisms may be provided to secure the proximal ends 111,131 of the first anchors 101,102 to the biasing member 105 and/or to ensure proximal ends 111,131 of the anchors 101,102 apply a compressive force on the biasing member 105 upon application of a pulling force of their respective distal ends 120,140.

The proximal end 111 of the first anchor 101 and the proximal end 131 of the second anchor 102 may have an enlarged size such that their width is larger than the width and/or diameter of the spring 105. As shown in Figures 1-6, in this embodiment the proximal ends 111,131 of the first anchor 101 and second anchor 102 have a respective hook or enlarged profile 115,135 to engage with the biasing member 105, e.g. an end thereof. By such provision, upon application of pulling force on the first anchor 101 and/or second anchor 102, a compressive force is exerted on the spring 105.

The distal portion 120 of the first anchor 101 has a plurality of connection elements 122 for connecting to a first location in a patient's mouth or to an attachment member. The distal portion 140 of second anchor 102 has a plurality of connection elements 142 for connecting to a second location in a patient's mouth or to an attachment member.

Here, the connection elements 122,142 are provided in the form of openings or holes, which are circular, but could also be oblong, rounded square, star-shaped, or any suitable shape.

It will be appreciated that the connection elements 122,142 may also be provided in any other suitable form and configuration, such as teeth and/or notches, wave-shaped grooves, interlocked rings, or a ratchet mechanism.

In the present embodiments, the connection elements 122,142 are longitudinally spaced apart on the distal portions 120,140 of respective first anchor 101 and second anchor 102.

Conveniently, the connection elements 122,142 are spaced apart at predetermined and regular intervals, which may help adjustment of the length of the orthodontic apparatus 100. In alternative embodiments, it will be appreciated that the connection elements 122,142 may be spaced apart at irregular intervals. It will be appreciated that the particular pattern defined by the connection elements 122,142 and the manner in which they are specifically provided may depend on the specific treatment and the intended level of adjustment required for a particular patent or subject.

In use, in order to adjust the length of the first anchor 101 and/or of the second anchor 102, for example to adjust the tension of the apparatus 100, first anchor 101 and/or second anchor 102 is/are disconnected from respective first attachment member and/or second attachment member (not shown), and reconnected to first attachment member and/or second attachment member via a different, more proximal connection elements 122,142. Advantageously, before or after reconnection to a respective first attachment member and/or second attachment member, the length of the first anchor 101 and/or second anchor 102 may be reduced, e.g. by cutting first anchor 101 and/or second anchor 102 extending distally beyond the newly selected connection element(s) 122,142. The apparatus 100 can then be fitted in a patient's mouth by attaching the first attachment member and/or second attachment member to a desired location in the patient's mouth, e.g. for example an archwire.

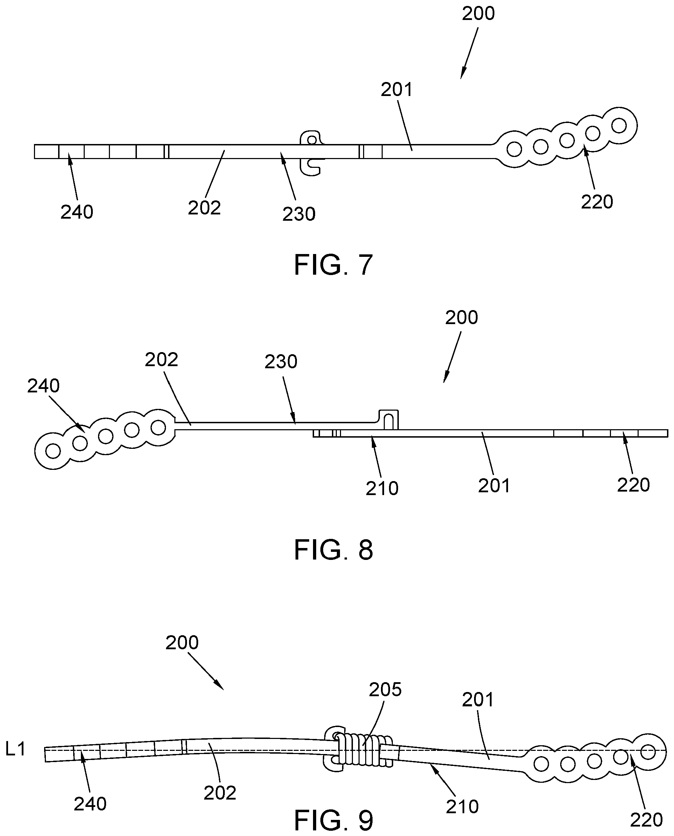

**Figures 7-11** illustrate an orthodontic apparatus 200 according to a second embodiment. The orthodontic apparatus 200 of Figures 7-11 is generally similar to the apparatus 100 of the first embodiment, like parts denoted by like numerals, but incremented by '100'. In this embodiment, the shape of the distal portions 220,240 is slightly different than in figures 1-6.

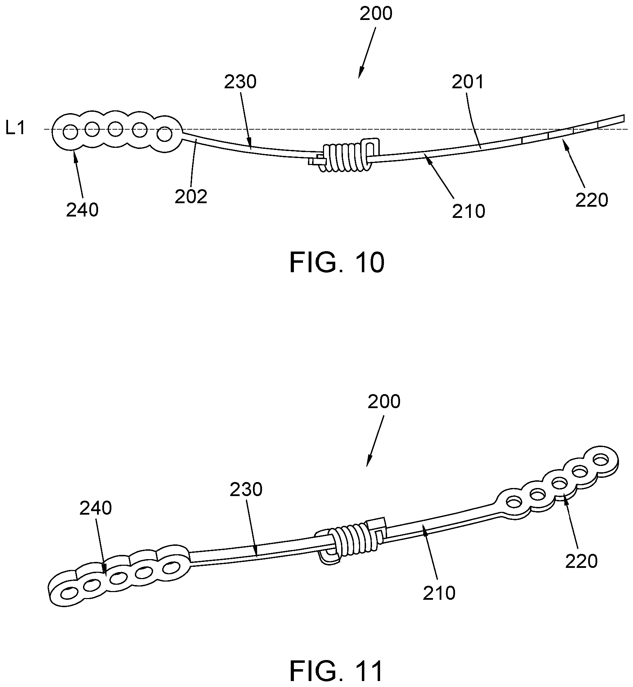

**Figure 7** shows top view of the apparatus 200 and **Figure 8** shows a side view thereof. **Figures 9** **and** **10** show the same views as those of Figures 7-8, respectively, but when the apparatus 200 is in an extended configuration, i.e. when the biasing member 205 is under compression due to the pulling force applied on distal end of distal portions 220,240, as illustrated by line L1. **Figure 11** is a perspective view of the apparatus 200 when in an extended configuration.

As in the apparatus 100 of the first embodiment, in this second embodiment, the proximal portions 210,230 of the first and second anchors 201,202 are flat and can engage each other and slide longitudinally relative to each other. This allows a central region of the apparatus 200, e.g. a portion of the device 200 in the region of the biasing member 205, to bend, flex or otherwise distort, when the apparatus is in an active or extended configuration, as best shown in **Figures 9-11****.** In use, this may permit movement of the proximal ends 210,230 of the first and second anchors 201,202 inwards and/or towards a patient's dental arch, when in an active or extended configuration. By such provision, the likelihood of interference between a patient's cheek(s) and the apparatus 200 in an activated configuration, e.g. upon a patient opening their mouth, is reduced, as the apparatus is configured to move inwards, e.g. away from the patient's cheek(s). Further, allowing for such deformation may permit the apparatus 200 to deform in the general direction of the pulling force between the second or distal portions or the first and second anchors, thus reducing the risk of damage or breakage of the device 200. The distal portions 220,240 may also be able bend, flex or otherwise distort, to permit the apparatus 200 to deform in the general direction of the pulling force between the second or distal portions or the first and second anchors, thus reducing the risk of damage or breakage of the device 200.

In order to permit such movement upon extension of the device, at least the proximal portions 210,230 of the first and second anchors 201,202, and optionally the distal portions 220,240 thereof, are made of a flexible material, typically a shape memory material, e.g. a shape-memory metal such as nitinol.

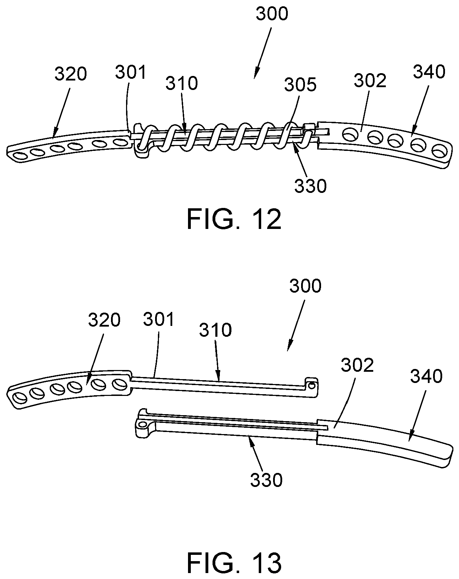

**Figures 12-13** illustrate an orthodontic apparatus 300 according to a third embodiment. The orthodontic apparatus 300 of Figures 12-13 is generally similar to the apparatus 100 of the first embodiment, like parts denoted by like numerals, but incremented by '200'.

As in the apparatus 100 of the first embodiment, in the apparatus 300 of the third embodiment (as best shown in Figure 13), the proximal portion 310 of the first anchor 301 extends in a first plane, and the distal portion 320 of the first anchor 301 extends in a second plane, and the first plane and the second plane are the same. The proximal portion 330 of the second anchor 302 extends in a third plane, and the distal portion 340 of the second anchor 302 extends in a fourth plane. Each of the proximal portion 330 and distal portion 340 of the second anchor 302 is substantially flat.

However, in this embodiment, third plane and the fourth plane are substantially parallel, i.e. the proximal portion 330 and the distal portion 340 of the second anchor extend in a substantially common plane.

As a result, in order for the proximal portions 310,330 of the first and second anchors 301,302 to engage each other, the first plane and the third plane are not parallel and are not the same, at last in a relaxed or contracted configuration. In this embodiment, the first plane and third plane are substantially perpendicular to each other.

In this embodiment, as shown in **Figures 12 and 13****,** the proximal portion 310 of the first anchor 301 and the first or proximal portion 330 of the second anchor 302 are configured to engage one another by complementary or interlocking configuration, which here consist of a groove or slot in the proximal portion 330 of the second anchor 302 configured to receive the proximal portion 310 of the first anchor. Such an arrangement may increase rigidity of the device 300 in the region of the proximal portions 310,330 the first and second anchors 301,302, when in an active or extended configuration.

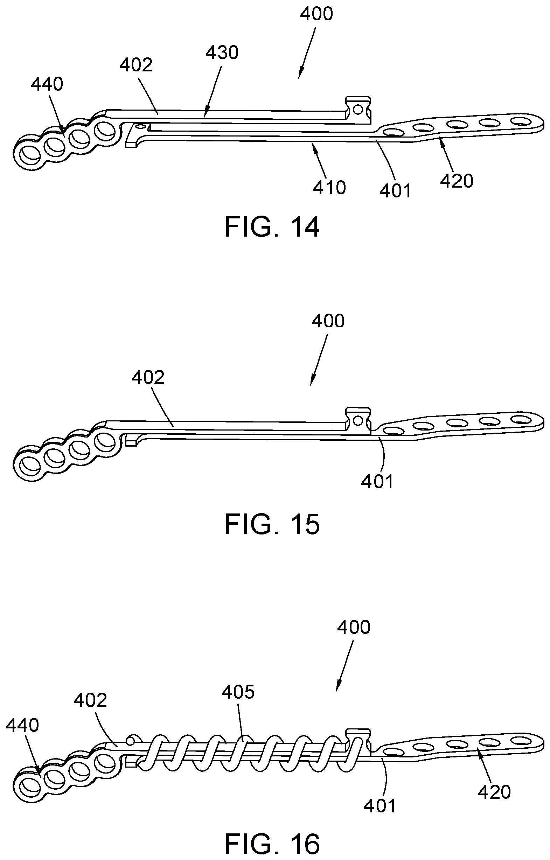

**Figures 14-16** illustrate an orthodontic apparatus 400 according to a fourth embodiment. The orthodontic apparatus 400 of Figures 14-16 is generally similar to the apparatus 200 of the second embodiment, like parts denoted by like numerals, but incremented by '200'. Whereas in the first, second and third embodiment, the first anchor is machined from a 0.4 mm-thick sheet of metal, and the second anchor 102 is machined from a 0.9 mm-thick sheet of metal, in the apparatus 400 of the fourth embodiment, the first anchor 401 and the second anchor 402 are not made from respective flat sheets of metal, but are moulded instead.

Moulding the first anchor 401 and the second anchor 402 allows the respective proximal portions 410,430 to have a more complex shape. For example, in this embodiment, the sides of the proximal portions 410,430 facing each other are planar, which allows the proximal portions 410,430 to slide easily, in use. However, the outer sides of the proximal portions 410,430 (facing away from each other) are curved, each of the first and second proximal portions 410,430 defining a semi-spherical shape. This allows the outer sides of the proximal portions 410,430 to more closely follow the generally tubular interior space defined by the spring 405, thus allowing a more complementary fit between the spring 405 and the proximal portions 410,430. Therefore, in this embodiment, the combined widths or diameter of the proximal portions 410,430 may be substantially equal to or marginally less than the internal diameter of the spring 405.

It will be understood that the present embodiments are provided by way of example only, the scope of the invention being defined by the claims.

## Claims

1. An orthodontic apparatus (100) comprising a biasing device, the biasing device being configured to bias the apparatus in a contracted configuration, the biasing device comprising:
a first anchor (101) having a first or proximal portion (110) including a proximal end (111) and a second or distal portion (120) including a distal end (121), wherein the first anchor (101) is configured for connecting to a first attachment member or to a first location within a patient's mouth at its second or distal portion (120);
a second anchor (102) having a first or proximal portion (130) including a proximal end (131) and a second or distal portion (140) including a distal end (141), wherein the second anchor (102) is configured for connecting to a second attachment member or to a second location within a patient's mouth at its second or distal portion (120); and
a biasing member (105) provided between the proximal end (111) of the first anchor (101) and the proximal end (131) of the second anchor (102) such that the first or proximal portion (110) of the first anchor (101) and the first or proximal portion (130) of the second anchor (102) overlap and extend through the biasing member (105), and wherein, upon extension, the proximal end (111) of the first anchor (101) and the proximal end (131) of the second anchor (102) apply a compressive force on opposite ends of the biasing member (105),
wherein the first or proximal portion (110) of the first anchor (101) extends in a first, longitudinal, direction at least when the biasing device is in a relaxed or contracted configuration and the first or proximal portion (130) of the second anchor (102) extend in a third, longitudinal, direction at least when the biasing device is in a relaxed or contracted configuration,
wherein the second or distal portion (120) of the first anchor (101) is substantially planar and extends in a second plane and in a second direction which is different from the first longitudinal direction of its respective first or proximal portion (110), and wherein the second or distal portion (140) of the second anchor (102) is substantially planar and extends in a fourth plane and in a fourth direction which is different from the third longitudinal direction of its respective first or proximal portion (130),
and wherein the second plane is different from the fourth plane.

2. An apparatus according to claim 1, wherein the second plane and the fourth plane are not parallel to each other.

3. An apparatus according to claim 1 or claim 2, wherein the second plane and the fourth plane are, at least when the device is in a relaxed or contracted configuration, at about 10-90° relative to each other, optionally at about 45-90° relative to each other, optionally at about 90°, relative to each other.

4. An apparatus according to preceding claim 1, wherein the first or proximal portion (110) of the first anchor (101) is substantially planar and extends in a first plane.

5. An apparatus according to claim 4, wherein at least a side of the first or proximal portion (110) of the first anchor (101) facing the second anchor (102) is substantially planar and/or flat.

6. An apparatus according to claim 4, wherein the first plane and the second plane are parallel, at least in a relaxed or contracted configuration.

7. An apparatus according to preceding claim 1, wherein the first or proximal portion (130) of the second anchor (102) extends in a third plane.

8. An apparatus according to claim 7, wherein at least a side of the first or proximal portion (130) of the second anchor (102) facing the first anchor (101) is substantially planar and/or flat.

9. An apparatus according to claim 4 and claim 7, wherein the first plane and the third plane are parallel, at least in a relaxed or contracted configuration, optionally wherein the first or proximal portion (110) of the first anchor (101) and the first or proximal portion (130) of the second anchor (102) are configured to contact each other along a flat surface thereof and/or to slide longitudinally and parallel relative to each other.

10. An apparatus according to claim 4, wherein the first plane and the second plane are not parallel, at least in a relaxed or contracted configuration.

11. An apparatus according to claim 10, wherein the first or proximal portion (110) of the first anchor (101) and the first or proximal portion (130) of the second anchor (102) are configured to engage one another by complementary or interlocking features.

12. An apparatus according to any preceding claim, wherein at least the first or proximal portions (110,130) of the first anchor (101) and second anchor (102) are made of a shape memory material, and/or wherein the second or distal portions (120,140) of the first anchor (101) and second anchor (102) are made of a shape memory material.

13. An apparatus according to any preceding claim, wherein the widths of the proximal portions (110,130) of the first anchor (101) and second anchor (102) are substantially equal.

14. An apparatus according to the preceding claim 13, wherein the width of the proximal portions (110,130) of the first anchor (101) and second anchor (102) is substantially the same as the thickness of the distal portion (140) of the second anchor (102).

15. An apparatus according to the preceding claim 14, wherein the second anchor (102) is manufactured from a single sheet of material.

## Patentansprüche

1. Kieferorthopädische Einrichtung (100), die Vorspannvorrichtung umfasst, wobei die Vorspannvorrichtung konfiguriert ist, um die Einrichtung in einer zusammengezogenen Konfiguration vorzuspannen, wobei die Vorspannvorrichtung umfasst:
eine erste Verankerung (101), die einen ersten oder proximalen Abschnitt (110) aufweist, der ein proximales Ende (111) beinhaltet, und einen zweiten oder distalen Abschnitt (120), der ein distales Ende (121) beinhaltet, wobei die erste Verankerung (101) konfiguriert ist, um mit ihrem zweiten oder distalen Abschnitt (120) an einem ersten Befestigungselement oder an einer ersten Stelle im Mund eines Patienten verbunden zu werden;
eine zweite Verankerung (102), die einen ersten oder proximalen Abschnitt (130) aufweist, der ein proximales Ende (131) beinhaltet, und einen zweiten oder distalen Abschnitt (140), der ein distales Ende (141) beinhaltet, wobei die zweite Verankerung (102) konfiguriert ist, um mit ihrem zweiten oder distalen Abschnitt (120) an einem zweiten Befestigungselement oder an einer zweiten Stelle im Mund eines Patienten verbunden zu werden; und
ein Vorspannelement (105), das zwischen dem proximalen Ende (111) der ersten Verankerung (101) und dem proximalen Ende (131) der zweiten Verankerung (102) bereitgestellt ist, so dass der erste oder proximale Abschnitt (110) der ersten Verankerung (101) und der erste oder proximale Abschnitt (130) der zweiten Verankerung (102) das Vorspannelement (105) überlappen und sich dadurch erstrecken, und wobei beim Ausdehnen das proximale Ende (111) der ersten Verankerung (101) und das proximale Ende (131) der zweiten Verankerung (102) eine Kompressionskraft auf gegenüberliegende Enden des Vorspannelements (105) anlegen,
wobei sich der erste oder proximale Abschnitt (110) der ersten Verankerung (101) mindestens dann in einer ersten Längsrichtung erstreckt, wenn sich die Vorspannvorrichtung in einer entspannten oder kontrahierten Konfiguration befindet, und sich der erste oder proximale Abschnitt (130) der zweiten Verankerung (102) mindestens dann in einer dritten Längsrichtung erstreckt, wenn sich die Vorspannvorrichtung in einer entspannten oder kontrahierten Konfiguration befindet,
wobei der zweite oder distale Abschnitt (120) der ersten Verankerung (101) im Wesentlichen planar ist und sich in einer zweiten Ebene und in einer zweiten Richtung erstreckt, die sich von der ersten Längsrichtung seines jeweiligen ersten oder proximalen Abschnitts (110) unterscheidet, und wobei der zweite oder distale Abschnitt (140) der zweiten Verankerung (102) im Wesentlichen planar ist und sich in einer vierten Ebene und in einer vierten Richtung erstreckt, die sich von der dritten Längsrichtung seines jeweiligen ersten oder proximalen Abschnitts (130) unterscheidet,
und wobei sich die zweite Ebene von der vierten Ebene unterscheidet.

2. Einrichtung nach Anspruch 1, wobei die zweite Ebene und die vierte Ebene nicht parallel zueinander sind.

3. Einrichtung nach Anspruch 1 oder Anspruch 2, wobei die zweite Ebene und die vierte Ebene, mindestens wenn sich die Vorrichtung in einer entspannten oder kontrahierten Konfiguration befindet, in etwa 10-90° in Bezug zueinander, optional in etwa 45-90° in Bezug zueinander, optional in etwa 90° in Bezug zueinander stehen.

4. Einrichtung nach dem vorstehenden Anspruch 1, wobei der erste oder proximale Abschnitt (110) der ersten Verankerung (101) im Wesentlichen planar ist und sich in einer ersten Ebene erstreckt.

5. Einrichtung nach Anspruch 4, wobei mindestens eine Seite des ersten oder proximalen Abschnitts (110) der ersten Verankerung (101), die der zweiten Verankerung (102) zugewandt ist, im Wesentlichen planar und/oder flach ist.

6. Einrichtung nach Anspruch 4, wobei die erste Ebene und die zweite Ebene mindestens in einer entspannten oder kontrahierten Konfiguration parallel sind.

7. Einrichtung nach dem vorstehenden Anspruch 1, wobei sich der erste oder proximale Abschnitt (130) der zweiten Verankerung (102) in einer dritten Ebene erstreckt.

8. Einrichtung nach Anspruch 7, wobei mindestens eine Seite des ersten oder proximalen Abschnitts (130) der zweiten Verankerung (102), die der ersten Verankerung (101) zugewandt ist, im Wesentlichen planar und/oder flach ist.

9. Einrichtung nach Anspruch 4 und Anspruch 7, wobei die erste Ebene und die dritte Ebene mindestens in einer entspannten oder kontrahierten Konfiguration parallel sind, wobei optional der erste oder proximale Abschnitt (110) der ersten Verankerung (101) und der erste oder proximale Abschnitt (130) der zweiten Verankerung (102) konfiguriert sind, um einander entlang einer flachen Oberfläche davon zu berühren und/oder sich längs und parallel in Bezug zueinander zu verschieben.

10. Einrichtung nach Anspruch 4, wobei die erste Ebene und die zweite Ebene mindestens in einer entspannten oder kontrahierten Konfiguration nicht parallel sind.

11. Einrichtung nach Anspruch 10, wobei der erste oder proximale Abschnitt (110) der ersten Verankerung (101) und der erste oder proximale Abschnitt (130) der zweiten Verankerung (102) konfiguriert sind, um durch komplementäre oder ineinandergreifende Merkmale miteinander in Eingriff zu stehen.

12. Einrichtung nach einem vorstehenden Anspruch, wobei mindestens die ersten oder proximalen Abschnitte (110, 130) der ersten Verankerung (101) und der zweiten Verankerung (102) aus einem Formgedächtnismaterial gefertigt sind, und/oder wobei die zweiten oder distalen Abschnitte (120, 140) der ersten Verankerung (101) und der zweiten Verankerung (102) aus einem Formgedächtnismaterial gefertigt sind.

13. Einrichtung nach einem vorstehenden Anspruch, wobei die Breiten der proximalen Abschnitte (110, 130) der ersten Verankerung (101) und der zweiten Verankerung (102) im Wesentlichen gleich sind.

14. Einrichtung nach dem vorstehenden Anspruch 13, wobei die Breite der proximalen Abschnitte (110, 130) der ersten Verankerung (101) und der zweiten Verankerung (102) im Wesentlichen gleich ist wie die Dicke des distalen Abschnitts (140) der zweiten Verankerung (102).

15. Einrichtung nach dem vorstehenden Anspruch 14, wobei die zweite Verankerung (102) aus einem einzigen Materialblech hergestellt ist.

## Revendications

1. Appareil orthodontique (100) comprenant un dispositif de sollicitation, le dispositif de sollicitation étant configuré pour solliciter l'appareil dans une configuration contractée, le dispositif de sollicitation comprenant :
un premier ancrage (101) présentant une première partie ou partie proximale (110) incluant une extrémité proximale (111) et une seconde partie ou partie distale (120) incluant une extrémité distale (121), dans lequel le premier ancrage (101) est configuré pour se raccorder à un premier élément de fixation ou à un premier emplacement dans la bouche d'un patient au niveau de sa seconde partie ou partie distale (120) ;
un second ancrage (102) présentant une première partie ou partie proximale (130) incluant une extrémité proximale (131) et une seconde partie ou partie distale (140) incluant une extrémité distale (141), dans lequel le second ancrage (102) est configuré pour se raccorder à un second élément de fixation ou à un second emplacement dans la bouche d'un patient au niveau de sa seconde partie ou partie distale (120) ; et
un élément de sollicitation (105) prévu entre l'extrémité proximale (111) du premier ancrage (101) et l'extrémité proximale (131) du second ancrage (102) de telle sorte que la première partie ou partie proximale (110) du premier ancrage (101) et la première partie ou partie proximale (130) du second ancrage (102) se chevauchent et s'étendent à travers l'élément de sollicitation (105), et dans lequel, lors de l'extension, l'extrémité proximale (111) du premier ancrage (101) et l'extrémité proximale (131) du second ancrage (102) appliquent une force de compression sur les extrémités opposées de l'élément de sollicitation (105),
dans lequel la première partie ou partie proximale (110) du premier ancrage (101) s'étend dans une première direction longitudinale au moins lorsque le dispositif de sollicitation est dans une configuration relâchée ou contractée et la première partie ou partie proximale (130) du second ancrage (102) s'étend dans une troisième direction longitudinale au moins lorsque le dispositif de sollicitation est dans une configuration relâchée ou contractée,
dans lequel la seconde partie ou partie distale (120) du premier ancrage (101) est sensiblement plane et s'étend dans un deuxième plan et dans une deuxième direction qui est différente de la première direction longitudinale de sa première partie ou partie proximale respective (110), et dans lequel la seconde partie ou partie distale (140) du second ancrage (102) est sensiblement plane et s'étend dans un quatrième plan et dans une quatrième direction qui est différente de la troisième direction longitudinale de sa première partie ou partie proximale respective (130),
et dans lequel le deuxième plan est différent du quatrième plan.

2. Appareil selon la revendication 1, dans lequel le deuxième plan et le quatrième plan ne sont pas parallèles entre eux.

3. Appareil selon la revendication 1 ou la revendication 2, dans lequel le deuxième plan et le quatrième plan sont, au moins lorsque le dispositif est dans une configuration relâchée ou contractée, à environ 10-90° l'un par rapport à l'autre, facultativement à environ 45-90° l'un par rapport à l'autre, facultativement à environ 90° l'un par rapport à l'autre.

4. Appareil selon la revendication 1 précédente, dans lequel la première partie ou partie proximale (110) du premier ancrage (101) est sensiblement plane et s'étend dans un premier plan.

5. Appareil selon la revendication 4, dans lequel au moins un côté de la première partie ou partie proximale (110) du premier ancrage (101) faisant face au second ancrage (102) est sensiblement plan et/ou plat.

6. Appareil selon la revendication 4, dans lequel le premier plan et le deuxième plan sont parallèles, au moins dans une configuration relâchée ou contractée.

7. Appareil selon la revendication 1 précédente, dans lequel la première partie ou partie proximale (130) du second ancrage (102) s'étend dans un troisième plan.

8. Appareil selon la revendication 7, dans lequel au moins un côté de la première partie ou partie proximale (130) du second ancrage (102) faisant face au premier ancrage (101) est sensiblement plan et/ou plat.

9. Appareil selon la revendication 4 et la revendication 7, dans lequel le premier plan et le troisième plan sont parallèles, au moins dans une configuration relâchée ou contractée, facultativement dans lequel la première partie ou partie proximale (110) du premier ancrage (101) et la première partie ou partie proximale (130) du second ancrage (102) sont configurées pour entrer en contact l'une avec l'autre le long d'une surface plane de celles-ci et/ou pour glisser longitudinalement et parallèlement l'un à l'autre.

10. Appareil selon la revendication 4, dans lequel le premier plan et le deuxième plan ne sont pas parallèles, au moins dans une configuration relâchée ou contractée.

11. Appareil selon la revendication 10, dans lequel la première partie ou partie proximale (110) du premier ancrage (101) et la première partie ou partie proximale (130) du second ancrage (102) sont configurées pour s'engager l'une avec l'autre par des caractéristiques complémentaires ou imbriquées.

12. Appareil selon une quelconque revendication précédente, dans lequel au moins les premières parties ou parties proximales (110, 130) du premier ancrage (101) et du second ancrage (102) sont constituées d'un matériau à mémoire de forme, et/ou dans lequel les secondes parties ou parties distales (120, 140) du premier ancrage (101) et du second ancrage (102) sont constituées d'un matériau à mémoire de forme.

13. Appareil selon une quelconque revendication précédente, dans lequel les largeurs des parties proximales (110, 130) du premier ancrage (101) et du second ancrage (102) sont sensiblement égales.

14. Appareil selon la revendication 13 précédente, dans lequel la largeur des parties proximales (110, 130) du premier ancrage (101) et du second ancrage (102) est sensiblement la même que l'épaisseur de la partie distale (140) du second ancrage (102).

15. Appareil selon la revendication 14 précédente, dans lequel le second ancrage (102) est fabriqué à partir d'une seule feuille de matériau.
